# EUROPÄISCHE PATENTSCHRIFT

(11) **EP 1 774 260 B1**
(45) Veröffentlichungstag und Bekanntmachung des Hinweises auf die Patenterteilung: **15.05.2019**
(21) Anmeldenummer: 05747807.5
(22) Anmeldetag: 31.05.2005
(51) Int. Cl.: G01C 21/26, G01C 21/36

(54) **NAVIGATIONSGERÄT**
NAVIGATION DEVICE
APPAREIL DE NAVIGATION

(30) Priorität: 28.07.2004 DE 102004036564
(43) Veröffentlichungstag der Anmeldung: 18.04.2007
(73) Patentinhaber: ROBERT BOSCH GMBH, 70442 Stuttgart (DE)
(72) Erfinder: MAY, Thomas, 38302 Wolfenbuettel (DE); KOPMANN, Wolfgang, 31139 Hildesheim (DE)
(86) Internationale Anmeldenummer: PCT/EP2005/052470
(87) Internationale Veröffentlichungsnummer: WO 2006/010660

(56) Entgegenhaltungen:
- EP-A- 1 055 911
- EP-A- 1 482 279
- EP-A2- 1 005 006
- WO-A-02/16875
- DE-A1- 10 103 025
- DE-A1- 19 959 307
- US-A1- 2003 212 485

## Beschreibung

### Stand der Technik

Die Erfindung geht von einem Navigationsgerät und einem Datenträger mit einer Navigationssoftware nach der Gattung der unabhängigen Patentansprüche aus.

Es sind Navigationsgeräte zum Betrieb in Kraftfahrzeugen bekannt, die üblicherweise in einer Mittelkonsole oder einem Armaturenbrett eines Kraftfahrzeugs installiert werden. Diese weisen regelmäßig Bedienelemente zur Eingabe eines Zielwunsches auf. Ferner weisen diese regelmäßig eine Software zur Bestimmung eines jeweils aktuellen Fahrzeugstandorts und zur Berechnung einer Fahrroute vom Standort zum eingegebenen Ziel auf. Ein aktueller Standort wird dabei auf Grundlage von Daten von einem im Fahrzzeug installierten Satellitenempfänger für GPS-(Global Positioning System) Satellitensignale und oftmals auch von Signalen von z.B. Gyro- oder Beschleunigungssensoren, eines Geschwindigkeitssignals o.ä. bestimmt. Diese Navigationsgeräte weisen darüber hinaus auch Ausgabemittel zur Leitung eines Fahrzeugführers entlang einer berechneten Fahrroute auf, wobei Fahrrichtungshinweise meist als gesprochene Hinweise, insbesondere Abbiegehinweise und/oder als Fahrrichtungsanzeige auf einem Display ausgegeben werden.

Beispielsweise auf der Internationalen Funkausstellung 2001 in Berlin ist ein solches Fahrzeugnavigationsgerät Typ "Online Pilot" der Fa. Blaupunkt GmbH vorgestellt worden, bei dem das relativ große Display eines Handheld-PCs, auch PDA, zur zusätzlichen Anzeige einer Straßenkarte zur verbesserten Orientierung des Fahrzeugführers genutzt wurde. Dazu wurden Informationen über den aktuellen Fahrzeugstandort über eine Schnittstelle des Navigationsgeräts und eine Schnittstelle des PDA in dieses übertragen.

In DE 199 12 742 A1 wird vorgeschlagen, eine in einem Fahrzeug-Navigationsgerät berechnete Fahrroute über eine Schnittstelle in ein für einen mobilen Einsatz vorgesehenes Gerät, hier beispielsweise ein Mobilfunktelefon, zu übertragen, so dass die Routeninformationen auch bei vom Fahrzeug-Navigationsgerät getrenntem Mobilfunktelefon von diesem ausgegeben werden können.

Es sind weiterhin Navigationsgeräte auf Basis von Handheld-PCs bekannt geworden, wobei der Handheld-PC über Ein- und Ausgabemittel, einen Prozessor zur Abarbeitung einer Software, eine Software zur Positionsbestimmung auf Basis der Signale eines anschließbaren GPS-Satellitenempfängers, eine Navigationssoftware sowie Kartendaten zur Routenberechnung und eine Schnittstelle zum Anschluss des GPS-Satellitenempfängers verfügt. Das Ergebnis der Routenberechnung wird dann beispielsweise als Kartenausschnitt über das Display des Geräts ausgegeben.

Aus der EP 1 055911 A1 ist eine Navigationseinrichtung bekannt, in der Routenfuhrungsinfonnation auf der Grundlage eingegebener Informationen und Positionsdaten angezeigt werden, wenn die eingegebenen Infonnationen über eine Tastatur eingegeben und die Positionsdaten von einer in einem Fahrzeug installierten Sensorbox übertragen werden. Dabei umfaßt die Sensorbox einen GPS-Empfänger zum Empfangen eines GPS-Signals über eine GPS-Antenne, einen Kreiselkompaß zum Abgeben von Richtungsdaten des Fahrzeugs und einen Empfanger zum Zuführen über eine Fernsteuerung eingebbarer, für eine Navigation erforderlicher Informationen, z.B. Zielinformationen, sowie eine Recheneinheit, in der aus dem GPS-Signal eine aktuelle Fahrzeugposition berechnet wird. Steht kein GPS-Signal zur Verftigung, wird die aktuelle Fahrzeugposition aus den Richtungsdaten sowie aus einer Fahrzeuggeschwindigkeitsinformation ermitelt, die der Sensorbox zuführbar ist. Die die aktuelle Fahrzeugposition beschreibenden Positionsdaten und die über die Fernsteuerung eingegebenen Daten werden an einen als externe Komponente mittels einer Schnittstellenschaltung, die als Sender arbeitet, über ein RS232C-Kabel an die Sensorbox anschließbaren Computer übertragen und in diesem über eine weitere Schnittstellenschaltung, die als Empfänger arbeitet, einer Recheneinheit zugeführt. Der externe Computer umfaßt ferner ein CD-ROM-Laufwerk für eine CD-ROM, auf der Kartendaten gespeichert sind, einen Programmspeicher für eine Navigationssoftware und eine Tastatur. In der Recheneinheit des externen Computers wird durch Abbildung der aktuellen Fahrzeugposition und der Zielinformation, wenn diese über die weitere Schnittstellenschaltung, die als Empfänger arbeitet, zugeführt werden, auf die Kartendaten die Routenführungsinformation erzeugt und über eine ebenfalls vom externen Computer umfaßte Anzeigeeinheit ausgegeben.

Bei dieser eine Navigationseinrichtung ist die Berechnung der für die Navigation nötigen Daten auf die Sensorbox und den externen Computer aufgeteilt. Der externe Computer kann von der Sensorbox getrennt werden; allerdings müssen dann alle benötigten Positionsdaten und Zielinformationen über die Tastatur des externen Computers eingegeben werden.

Aus der DE 199 59 307 A1 ist eine Navigations- und Steuervorrichtung für Fahrzeuge sowie eine Haltevorrichtung für ein Mobilfunkgerät bekannt. Insbesondere wird darin eine Navigationsvorrichtung für Fahrzeuge mit einem Navigierer beschrieben bestehend aus einer GPS-Antenne zum Empfangen von Satellitendaten, einem GPS-Empfänger zum Erzeugen von GPS-Signalen, einem Speicher zum Abspeichem von Informationsdaten über eine Landkarte und einem Navigationsrechner zum Berechnen von Standortkoordinaten des Fahrzeuges aus den GPS-Signalen und zum Berechnen von Fahrtrichtungsdaten als Ausgabedaten in Abhängigkeit von vorgegebene Zielkoordinaten repräsentierenden Eingabedaten. Dabei ist der Navigationsrechner über eine Koppeleinheit mit einem Mobilfunkgerät derart verbunden, dass eine Eingabeeinheit und/oder eine Anzeigeeinheit des Mobilfunkgerätes zur Eingabe der Eingabedaten bzw. der Anzeige der Ausgabedaten des Navigationsrechners vorgesehen ist. Dadurch soll die Funktionalität des Navigationsrechners erweitert werden.

In der EP 1 482 279 A2 ist ein Navigationssystem offenbart, umfassend einen mobilen Client-Teil und einen stationären Navigationssrechner-Teil, wobei der mobile Client-Teil und der stationäre Navigationsrechner-Teil über eine Mobilfunkstrecke miteinander gekoppelt sind. Der mobile Client-Teil überträgt über die Mobilfunkstrecke Positionsdaten an den stationären Navigationsrechner-Teil, wobei der Navigationsrechner-Teil in Abhängigkeit von den zuvor durch den mobilen Client-Teil übertragenen Positionsdaten Manöveranweisungsdaten berechnet und an den Client-Teil überträgt, und wobei der Client-Teil die von dem Navigationsserver-Teil übertragenen Manöveranweisungsdaten für einen Benutzer wahrnehmbar macht. Ferner wird ein Navigationsverfahren offenbart, bei dem der Navigationsrechner-Teil an den Client-Teil wegabschnittsweise Daten zu Wegepunkten und Wegepunkte verbindenden Strecken überträgt, wobei in einem ersten Teilschritt nur Daten betreffend einen ersten Teil der Wegepunkte und Strecken sowie die Daten betreffend das nächste durchzuführende Manöver von dem Navigationsserver-Teil an den Client-Teil übertragen werden, und wobei in einem zweiten Schritt Daten betreffend mindestens einen zweiten Teil der Wegepunkte und Strecken übertragen wird.

Die DE 101 03025 A1 zeigt eine Navigationsvorrichtung und ein Aufzeichnungsmedium zur Bereitstellung einer Kommunikation zwischen Anwendungen. Ein Navigationsanwendungsmodul, welches Navigationsdienste bereitstellt, kommuniziert mit einem Verteilungsanwendungsmodul zum Austauschen von Daten, so dass Sammlungs- und Lieferungsinformationsdienste unter Verwendung von Navigationsdiensten ohne eine Benutzerintervention bereitgestellt werden.

Aus der US 2003/0212485 A1 ist ein Navigationssystem-Interface für ein Fahrzeug bekannt. Die Schrift beschreibt ein System zur Wiedergabe von Information an einen Nutzer im Fahrzeug, aufweisend ein Fahrzeug-Innenelement. Das System umfasst ein Interface bzw. eine Schnittstelle, die mit dem Fahrzeug-Innenelement gekoppelt und dazu gestaltet ist, eine Nachrichtenverbindung mit einem transportablen Rechengerät herzustellen, eine Anzeigeeinheit und eine Datenverarbeitungsschaltung. Die Datenverarbeitungsschaltung ist dazu gestaltet, die Information vom transportablen Rechengerät zu empfangen, die gespeicherte Information zu verarbeiten und die Information zur Darstellung auf der Anzeigeeinheit bereitzustellen. Das transportable Rechengerät empfangt Information, die von einer Basiseinheit ausgesendet wird. Die Basiseinheit stellt eine Datenquelle dar und ist beispielsweise an Tankstellen, Autobahnraststätten oder Kiosken angeordnet. Das transportable Rechengerät überträgt die von der Basiseinheit empfangene Information an die Anzeigeeinheit. Die Richtungsinformation wird in der Anzeigeeinheit gespeichert, verarbeitet und wiedergegeben. Die Anzeigeeinheit überwacht jedoch nicht den Standort des Fahrzeugs, so dass kostspielige zusätzliche Antennen, Empfänger und Datenbanken für eine Standortbestimmungsschaltung eingespart werden.

Aus der EP 1 005 006 A2 ist ein Fahrzeugnavigationssystem mit einem abnehmbaren Positionierungsempfänger bekannt, der von einer Person umhergetragen und zum Bestimmen einer Standortinformation durch ein globales Standortbestimmungssystem benutzt werden kann. Der transportable Empfänger ist in einem Gehäuse gehalten, das selektiv in einer Dockstation aufgenommen und aus dieser entnehmbar ist. Die Dockstation ist dauerhaft im Fahrzeug verbaut. Das Gehäuse enthält eine erste Anzeige, die einem Nutzer des transportablen Empfängers einen Hinweis auf eine Standortinformation liefert. Eine zweite Anzeige ist im Fahrzeug angeordnet, um einen Hinweis auf eine Standortinformation immer dann zu liefern, wenn das Gehäuse in der Dockstation aufgenommen ist. Ein mit dem Fahrzeug verbundener elektronischer Controller steuert die Aktivierungszustände der ersten und zweiten Anzeige, wenn das Empfängergehäuse in der Dockstation aufgenommen ist. Der Controller im Fahrzeug steuert die Anzeige von Information, die durch den Positionierungsempfänger verfügbar ist. Der Controller aktiviert die zweite Anzeige, wenn das Gehäuse in der Dockstation aufgenommen ist. Die zweite Anzeige liefert dann die globale Standortinformation an den Fahrer. Somit steuert der Controller im Fahrzeug den Positionierungsempfänger.

### Vorteile der Erfindung

Die Erfindung mit den Merkmalen der unabhängigen Patentansprüche hat den Vorteil, dass Navigationsgeräte auf Basis von für einen mobilen Einsatz vorgesehenen Geräten, insbesondere sogenannten Handheld-Computern, auch PDA (Personal Digital Assistent), Mobilfunktelefonen u.ä., verbessert werden. Insbesondere wird die Genauigkeit der Positionsbestimmung bei solchen Navigationsgeräten entscheidend verbessert.

Hierzu weist ein für einen mobilen Einsatz vorgesehenes Gerät, auf dessen Basis das erfindungsgemäße Navigationsgerät realisiert wird, Ein- und Ausgabemittel, einen Prozessor zur Abarbeitung einer Software, eine Navigationssoftware zur Positionsbestimmung und zur Routenberechnung und eine Schnittstelle zur Übertragung von Informationen in das Gerät auf, wobei diese Schnittstelle dazu ausgebildet ist, bei Betrieb des Geräts in einem Kraftfahrzeug über eine Schnittstelle des Kraftfahrzeugs Betriebs- und/oder Sensordaten mindestens einer Fahrzeugkomponente in das Gerät einzulesen.

Vorteilhaft nutzt die in dem Gerät vorhandene Navigationssoftware die über die Schnittstelle des Geräts eingelesenen Betriebs- und/oder Sensordaten zur Positionsbestimmung und/oder zur Bestimmung eines Bewegungszustandes des Fahrzeugs.

Vorteilhaft ist vorgesehen, dass die über die Schnittstelle des Geräts eingelesenen Betriebs- und/oder Sensordaten Signale mindestens eines Radsensors, ein Geschwindigkeitssignal, Signale mindestens eines Beschleunigungssensors, Signale mindestens eines Gyroskops und/oder Signale einer Rückwärtsfahrerkennung des Fahrzeugs sind.

Gemäß einer vorteilhaften Weiterbildung der Erfindung nutzt das für einen mobilen Einsatz vorgesehene Gerät, also insbesondere Handheld-PC, PDA oder Mobilfunktelefon die vorhandenen Hardwareressourcen einer vorhandenen Kraftfahrzeugausstattung zum Zwecke der Realisierung der Funktion eines Fahrzeugnavigationsgeräts mit aus.

Dazu ist beispielsweise vorgesehen, dass die erste oder eine weitere Schnittstelle des für einen mobilen Einsatz vorgesehenen Geräts dazu ausgebildet ist, von der Navigationssoftware erzeugte Informationen an die zweite oder eine weitere Schnittstelle des Fahrzeugs zu übertragen.

Ferner ist dazu beispielsweise vorgesehen, dass es sich bei den von der Navigationssoftware erzeugten Informationen um Fahranweisungen für den Fahrzeugführer handelt, welche dazu vorgesehen sind, über eine Ausgabeeinrichtung des Fahrzeugs ausgegeben zu werden.

Alternativ oder ergänzend kann weiter vorgesehen sein, dass die erste Schnittstelle des für einen mobilen Einsatz vorgesehenen Geräts weiter dazu ausgebildet ist, Bediensignale einer über eine Bedieneinheit verfügenden Fahrzeugkomponente zu empfangen und dass ferner eine Betriebssoftware des Geräts dazu ausgebildet ist, die über die erste Schnittstelle empfangenen Bediensignale in Bedienfunktionen des Geräts umzusetzen.

### Zeichnungen

Ausführungsbeispiele der Erfindung sind in der Figur dargestellt und werden nachfolgend näher erläutert. Die Figur zeigt ein Blockschaltbild eines erfindungsgemäßen Navigationsgeräts auf Basis eines für einen mobilen Einsatz vorgesehenen Geräts wie Handheld-PC, PDA oder Mobilfunktelefon.

### Beschreibung der Ausführungsbeispiele

Ein wesentlicher Aspekt der Erfindung besteht in der Übertragung von in einem Fahrzeug, insbesondere Kraftfahrzeug vorhandenen Informationen wie z.B. Tachosignal, Gyrosignal, Rückfahrsignal über eine Softwareschnittstelle und/oder eine kabelgebundene oder Funkverbindung wie z.B. Bluetooth, IRDA, WLAN an ein mobiles Gerät wie Mobilfunktelefon, PDA oder Smartphone, welche mit einer Navigationssoftware zur Durchführung einer Navigationsfunktionalität ausgestattet sind. Diese zusätzlichen Informationen ermöglichen eine Genauigkeitsverbesserung bei einer Ortung oder einer Feststellung eines Bewegungszustandes des Fahrzeugs, in welchem ein solches Navigationsgerät betrieben wird. Über eine weitere Schnittstelle kann das mobile Gerät die Benutzerschnittstelle des Autoradios im Fahrzeug zur Darstellung nutzen (z.B. auch Bluetooth Handsfree Profile).

Das Autoradio, in diesem Beispiel die Kommunikationsschnittstelle auf Seite des Fahrzeugs, erhält aus eigenen Sensoren oder aus dem Fahrzeugnetz die Informationen wie Gyrosignal, Tachosignal, GPS Information, Rückfahrsignal. Zudem verfügt es über eine kabelgebundene oder Funkschnittstelle zum mobilen Gerät. Die Verbindung wird dynamisch aufgebaut. Aus Sicherheitsaspekten kann vorher eine Registrierung erfolgen.

Die Navigationssoftware wird auf dem Mobilen Gerät per Datenträger, über einen Server, per PC oder auch direkt vom Autoradio installiert. Die Navigationssoftware kommuniziert über die Verbindung mit dem Autoradio, fragt die Sensordaten ab und verbessert damit die Navigationsberechnung und Darstellung (verbesserte Ortung). Das mobile Gerät nutzt entweder seine eigene Benutzerschnittstelle oder nutzt über die Verbindung zum Autoradio über eine weitere Softwareschnittstelle die Benutzerschnittstelle des Autoradios. Alternativ kann das mobile Gerät die Fahrhinweise als Daten übertragen welche dann vom Autoradio dargestellt werden.

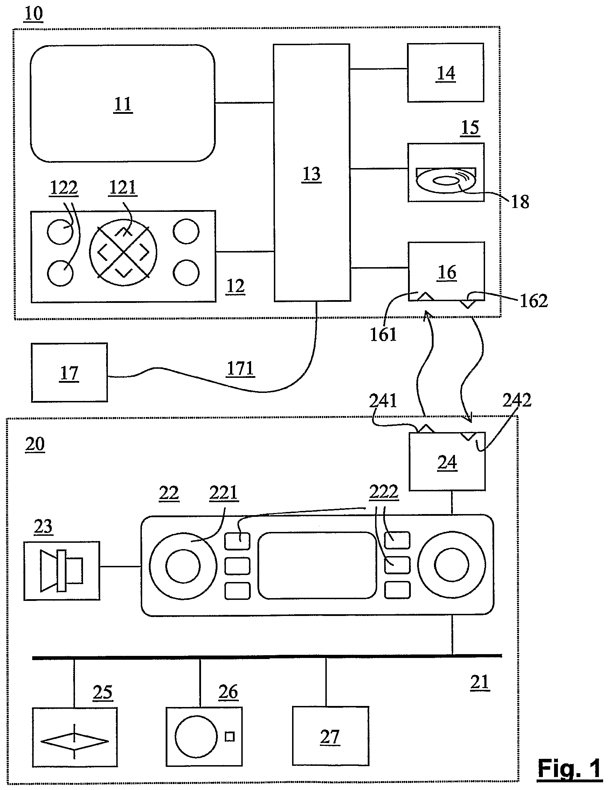

Figur 1 zeigt ein Blockschaltbild einer erfindungsgemäßen Anordnung zur Nutzung eines für einen mobilen Einsatz vorgesehenen Geräts wie Mobilfunktelefon, Handheld-PC, PDA (Personal Digital Assistent) oder eines vergleichbaren Geräts mit einem integrierten Rechner bzw. Prozessor.

Das Gerät 10, nachfolgend auch vereinfachend als PDA bezeichnet, verfügt über eine Ausgabeeinheit 11 in Form eines Displays. Weiter verfügt das Gerät 10 über eine Eingabeeinheit 12 mit Bedienelementen in Form einer Wipptaste 121 zur Steuerung eines Cursors auf dem Display 11 und in Form weiterer Tastschalter 122 zur Eingabe von Bedienbefehlen. Das Gerät 10 verfügt weiter über einen Prozessor 13 zur Abarbeitung einer Betriebssoftware des Geräts, die einem Speicher 14 gespeichert ist und ferner auch zur Abarbeitung einer Navigationssoftware. Die Navigationssoftware ist dabei auf einem austauschbaren Datenträger 18, beispielsweise einer Speicher-Chipkarte gespeichert, der bzw. die mittels eines entsprechenden Lesegeräts 15 ausgelesen werden kann.

Die Navigationssoftware ist dazu ausgebildet, aus Signalen einer Positionsbestimmungseinrichtung bzw. aus Sensor- oder sonstigen geeigneten Datensignalen die Position des Geräts und damit auch eines Fahrzeugs, in dem das Gerät betrieben wird, zu bestimmen. Bei den zur Positionsbestimmung geeigneten Signalen kann es sich beispielsweise um Signale eines Satellitenempfängers 17 zum Empfang und zur Auswertung von GPS-Satellitensignalen handeln, der über ein Kabel oder eine andere Kommunikationsverbindung mit dem PDA verbunden ist. Der GPS-Empfänger kann dabei beispielsweise in Form einer sogenannten GPS-Maus 17 realsiert sein, also in einem eigenen kleinen Gehäuse zur Anbringung auf dem Armaturenbrett eines Kraftfahrzeugs angeordnet sein. In einem Beispiel, dass nicht unter den Schutzbereich der Ansprüche fällt, kann der GPS-Empfänger 17 auch als Teil eines im Fahrzeug installierten herkömmlichen Fahrzeugnavigationssystems ausgebildet sein, auf das über einen Datenbus 21 des Kraftfahrzeugs zugegriffen werden kann.

Erfindungsgemäß weist ein solches PDA 10 eine erste Kommunikationsschnittstelle 161 mit Mitteln zum Empfang von Signalen von einer entsprechenden komplementären (zweiten) Sendeschnittstelle 241 des Fahrzeugs auf. Diese erste Schnittstelle 161 ist hier als Teil eines Schnittstellenmoduls 16 ausgeführt und beispielsweise zum Empfang von Bluetooth-, IRDA- oder WLAN-Datensignalen ausgebildet.

Die Fahrzeugausstattung 20 umfasst einen Datenbus 21, an den verschiedene Komponenten, wie ein Autoradio 22, ein Kreiselkompass, auch Gyroskop oder Gyro 25, ein Tachosignalgenerator 26, Beschleunigungssensoren 27 und weitere Komponenten angschlossen sind. Der Kreiselkompass 25 kann, muss aber nicht beispielsweise Teil eines an sich bekannten Fahrzeugnavigationssystems sein, welches in Kraftfahrzeug fest installiert ist. Der Tachosignalgenerator 26 nutzt beispielsweise Signale eines ABS-Sensors zur Erzeugung eines Geschwindigkeitssignals, welches für die Geschwindigkeitsanzeige im Fahrzeug und darüber hinaus für eine geschwindigkeitsabhängige Lautstärkesteuerung des Autoradios 22 genutzt wird. Bei den Beschleunigungssensoren 27 handelt es beispielsweise um Unfalldetektoren für eine Airbag-Auslösung.

Erfindungsgemäß weist die Fahrzeugausstattung 20 eine weiteres Schnittstellenmodul 24 auf, welches mit dem Datenbus 21 verbunden ist. Im vorliegenden Fall ist das Schnittstellenmodul beispielsweise als Teil des Autoradios 22 ausgeführt. Über eine (die zweite) Schnittstelle 241 dieses weiteren Schnittstellelmoduls 24 werden die o.g. Signale bzw. Sensordaten an die erste Schnittstelle 161 des erfindungsgemäßen Geräts übertragen.

Die Navigations- bzw. Positionsbestimmungssoftware des Geräts 10 ist dazu ausgebildet, diese Informationen, also insbesondere Positionsbestimmungssignale des GPS-Satellitenempfängers 17, Signale mindestens eines Radsensors, ein Geschwindigkeitssignal, Signale mindestens eines Beschleunigungssensors, Signale mindestens eines Gyroskops und/oder Signale einer Rückwärtsfahrerkennung zum Zwecke einer verbesserten Positionsbestimmung und/oder Bewegungszustandserkennung zu nutzen. Bevorzugt werden diese Informationen miteinander zu einer resultierenden Fahrzeugposition verknüpft und diese resultierende Fahrzeugposition mit Daten einer auf dem Datenträger 18 vorhandenen digitalen Karte im Sinne einer Plausibilisierung abgeglichen (map matching).

Gemäß einer vorteilhaften Weiterbildung der Erfindung ist weiter vorgesehen, dass das PDA beispielsweise zum Zwecke der Zielführung mit Fahranweiungen in Abhängigkeit eines ermittelten Fahrzeugstandorts und einer berechneten Route nicht nur sein eigene Ausgabemittel 11, sondern darüber hinaus auch weitere Ausgabemittel der Fahrzeugausstattung 20 nutzt. Insbesondere sind dies an das Autoradio 22 angeschlossene Lautsprecher 23, über die Fahrrichtungshinweise in gesprochener Form ausgegeben werden können.

Hierzu verfügt das PDA über die Möglichkeit, Informationen nicht nur zu empfangen, sondern auch zu senden. Dies erfolgt im vorliegenden Fall über eine weitere, hier als Sendeschnittstelle ausgebildete Schnittstelle 162, die wiederum als Bluetooth,- IRDA-, WLAN- oder auch als kabelgebundene Schnittstelle ausgebildet sein kann. Die Fahrzeugausstattung verfügt über eine entsprechende korrespondierende zweite weitere Schnittstelle 242 zum Empfang der von dem PDA gesendeten Signale bzw. Daten, die durch das Autoradio 22 bzw. die daran angeschlossenen Lautsprecher 23 wiedergegeben werden. Alternativ oder ergänzend können diese als optische Meldung auf einem im Fahrzeug verbauten Display, z.B. im Kombiinstrument welches z.B. über den Fahrzeugbus angeschlossen ist, wiedergegeben werden.

Gemäß einer weiteren Weiterbildung kann auch vorgesehen sein, dass das PDA bei Betrieb im Fahrzeug über Bedienelemente von dessen Ausstattung bedient werden kann. So verfügt beispielsweise das Autoradio 22 über Bedienelemente, hier in Form von Drehknöpfen 221 zur quasikoninuierlichen Einstellung von Parametern oder zum Durchlaufen von Listeneinträgen und ferner von Druckschaltern 222. Die über diese Bedienelemente bzw. Bedienoberfläche in Verbindung mit der Software des Autoradios 22 erzeugten Bediensignale können über die zweite Schnittstelle 241 und die erste Schnittstelle 161 an den Rechern 13 des PDA übermittelt werden und somit zur Bedienung des PDA verwendet werden.

## Patentansprüche

1. Navigationsgerät umfassend ein für einen mobilen Einsatz vorgesehenes mobiles Gerät (10) mit Ein- und Ausgabemitteln (11, 12), mit einem Prozessor (13) zur Abarbeitung einer Software, mit einer Navigationssoftware zur Positionsbestimmung und zur Routenberechnung und mit einer ersten Schnittstelle (161) zur Übertragung von Informationen in das mobile Gerät,
**dadurch gekennzeichnet,**
**dass** die erste Schnittstelle (161) dazu ausgebildet ist, bei Betrieb des mobilen Geräts in einem Kraftfahrzeug über eine zweite Schnittstelle (241) des Kraftfahrzeugs Betriebs- und/oder Sensordaten mindestens einer Fahrzeugkomponente (25, 26, 27) in das mobile Gerät (10) einzulesen, und dass das Navigationsgerät eine Positionsbestimmungseinrichtung aufweist und dass die Navigationssoftware so ausgebildet ist, dass sie aus den Signalen dieser Positionsbestimmungseinrichtung und den Betriebs- und/oder Sensordaten der mindestens einen Fahrzeugkomponente (25, 26, 27) eine verbesserte Positionsbestimmung durchführt.

2. Navigationsgerät nach Anspruch 1, **dadurch gekennzeichnet, dass** die Navigationssoftware dazu ausgebildet ist, die über die erste Schnittstelle (161) eingelesenen Betriebs- und/oder Sensordaten zur Bestimmung eines Bewegungszustandes des Fahrzeugs zu verwenden.

3. Navigationsgerät nach einem der vorhergenden Ansprüche, **dadurch gekennzeichnet, dass** die über die erste Schnittstelle (161) des mobilen Geräts (10) eingelesenen Betriebs- und/oder Sensordaten Signale mindestens eines Radsensors (26), ein Geschwindigkeitssignal, Signale mindestens eines Beschleunigungssensors (27), Signale mindestens eines Gyroskops (25) und/oder Signale einer Rückwärtsfahrerkennung sind.

4. Navigationsgerät nach einem der vorhergehenden Ansprüche, dass die erste oder eine weitere Schnittstelle (162) des mobilen Geräts (10) dazu ausgebildet ist, von der Navigationssoftware erzeugte Informationen an die zweite oder eine weitere Schnittstelle (242) des Fahrzeugs zu übertragen.

5. Navigationsgerät nach Anspruch 4, **dadurch gekennzeichnet, dass** es sich bei den von der Navigationssoftware erzeugten Informationen um Fahranweisungen für den Fahrzeugführer handelt, welche dazu vorgesehen sind, über eine Ausgabeeinrichtung (23) des Fahrzeugs ausgegeben zu werden.

6. Navigationsgerät nach einem der vorhergehenden Ansprüche, **dadurch gekennzeichnet, dass** die erste Schnittstelle (161) des mobilen Geräts (10) weiter dazu ausgebildet ist, Bediensignale einer über eine Bedieneinheit (221, 222) verfügenden Fahrzeugkomponente (22) zu empfangen und dass ferner eine Betriebssoftware des mobilen Geräts dazu ausgebildet ist, die über die erste Schnittstelle (161) empfangenen Bediensignale in Bedienfunktionen des mobilen Geräts (10) umzusetzen.

7. Datenträger (18) mit einer Navigationssoftware zur Verwendung in einem für einen mobilen Einsatz vorgesehenen mobilen Gerät (10) eines Navigationsgeräts, wobei die Navigationssoftware ein Softwaremodul umfasst, welches über eine Schnittstelle (161) des mobilen Geräts (10) eingelesene Betriebsdaten eines Fahrzeugs, in welchem das mobile Gerät (10) betrieben wird, oder Sensordaten von in dem Fahrzeug angeordneten Sensoren (25, 26, 27) zur Positionsbestimmung oder zur Bestimmung eines Bewegungszustandes des Fahrzeugs nutzt, und wobei das Navigationsgerät eine Positionsbestimmungseinrichtung aufweist und dass die Navigationssoftware so ausgebildet ist, dass sie aus den Signalen dieser Positionsbestimmungseinrichtung und den Betriebs- und/oder Sensordaten der mindestens einen Fahrzeugkomponente (25, 26, 27) eine verbesserte Positionsbestimmung durchführt.

## Claims

1. Navigation appliance comprising a mobile device (10), intended for mobile use, having
input and output means (11, 12), having a processor (13) for executing a piece of software, having a piece of navigation software for position determination and for route calculation and having a first interface (161) for transmitting information to the mobile device,
**characterized**
**in that** the first interface (161) is designed so as, when the mobile device is operated in a motor vehicle, to use a second interface (241) of the motor vehicle to read in operating and/or sensor data of at least one vehicle component (25, 26, 27) into the mobile device (10),
and **in that** the navigation appliance has a position determination device and in that the navigation software is designed such that it performs improved position determination from the signals of this position determination device and the operating and/or sensor data of the at least one vehicle component (25, 26, 27).

2. Navigation appliance according to Claim 1, **characterized in that** the navigation software is designed to use the operating and/or sensor data read in via the first interface (161) for determining a motion state of the vehicle.

3. Navigation appliance according to either of the preceding claims, **characterized in that** the operating and/or sensor data read in via the first interface (161) of the mobile device (10) are signals of at least one wheel sensor (26), a speed signal, signals of at least one acceleration sensor (27), signals of at least one gyroscope (25) and/or signals of a reversing detection system.

4. Navigation appliance according to one of the preceding claims, in that the first or a further interface (162) of the mobile device (10) is designed to transmit information generated by the navigation software to the second or a further interface (242) of the vehicle.

5. Navigation appliance according to Claim 4, **characterized in that** the information generated by the navigation software is driving instructions for the vehicle driver that are intended to be output via an output device (23) of the vehicle.

6. Navigation appliance according to one of the preceding claims, **characterized in that** the first interface (161) of the mobile device (10) is further designed to receive operator control signals of a vehicle component (22) having an operator control unit (221, 222) and **in that** further a piece of operating software of the mobile device is designed to convert the operator control signals received via the first interface (161) into operator control functions of the mobile device (10).

7. Data storage medium (18) having a piece of navigation software for use in a mobile device (10), intended for mobile use, of a navigation appliance, wherein the navigation software comprises a software module that uses operating data, read in via an interface (161) of the mobile device (10), of a vehicle in which the mobile device (10) is operated or sensor data from sensors (25, 26, 27) arranged in the vehicle for position determination or for determining a motion state of the vehicle, and wherein the navigation appliance has a position determination device and the navigation software is designed such that it performs improved position determination from the signals of this position determination device and the operating and/or sensor data of the at least one vehicle component (25, 26, 27).

## Revendications

1. Appareil de navigation comprenant un appareil mobile (10) prévu pour une application mobile, qui comporte des moyens d'entrée et de sortie (11, 12), un processeur (13) permettant l'exécution d'un logiciel, un logiciel de navigation permettant la détermination d'une position et le calcul d'un itinéraire et une première interface (161) permettant la transmission d'informations vers l'appareil mobile,
**caractérisé en ce que** la première interface (161) est conçue pour lire dans l'appareil mobile (10), lors du fonctionnement de l'appareil mobile dans un véhicule automobile, des données de fonctionnement et/ou des données de capteurs d'au moins un composant de véhicule (25, 26, 27) par l'intermédiaire d'une seconde interface (241) du véhicule automobile,
et **en ce que** l'appareil de navigation comporte un dispositif de détermination de position et **en ce que** le logiciel de navigation est conçu de manière à ce qu'il effectue une détermination de position améliorée à partir des signaux dudit dispositif de détermination de position et des données de fonctionnement et/ou de capteurs dudit au moins un composant de véhicule (25, 26, 27).

2. Appareil de navigation selon la revendication 1, **caractérisé en ce que** le logiciel de navigation est conçu pour utiliser les données de fonctionnement et/ou de capteurs lues par l'intermédiaire de la première interface (161) pour la détermination d'un état de déplacement du véhicule.

3. Appareil de navigation selon l'une des revendications précédentes, **caractérisé en ce que** les données de fonctionnement et/ou de capteurs lues par l'intermédiaire de la première interface (161) de l'appareil mobile (10) sont des signaux d'au moins un capteur de roue (26), un signal de vitesse, des signaux d'au moins un capteur d'accélération (27), des signaux d'au moins un gyroscope (25) et/ou des signaux d'un système de détection de déplacement en marche arrière.

4. Appareil de navigation selon l'une des revendications précédentes, en ce que la première ou une autre interface (162) de l'appareil mobile (10) est conçue pour transmettre des informations générées par le logiciel de navigation à la seconde ou à une autre interface (242) du véhicule.

5. Appareil de navigation selon la revendication 4, **caractérisé en ce que** les informations générées par le logiciel de navigation sont des instructions de conduite destinées au conducteur du véhicule, qui sont prévues pour être délivrées par l'intermédiaire d'un dispositif de sortie (23) du véhicule.

6. Appareil de navigation selon l'une des revendications précédentes, **caractérisé en ce que** la première interface (161) de l'appareil mobile (10) est en outre conçue pour recevoir des signaux de fonctionnement d'un composant de véhicule (22) disposant d'une unité de commande (221, 222) et **en ce qu'**un logiciel d'exploitation de l'appareil mobile est en outre conçu pour convertir en fonctions de commande de l'appareil mobile (10) les signaux de commande reçus par l'intermédiaire de la première interface (161).

7. Support de données (18) ayant un logiciel de navigation destiné à être utilisé dans un appareil mobile (10) d'un appareil de navigation destiné à une application mobile, dans lequel le logiciel de navigation comprend un module logiciel qui utilise des données de fonctionnement, lues par l'intermédiaire d'une interface (161) de l'appareil mobile (10), d'un véhicule dans lequel l'appareil mobile (10) est mis en oeuvre, ou des données capteurs qui proviennent de capteurs (25, 26, 27) disposés dans le véhicule, pour déterminer la position ou pour déterminer un état de déplacement du véhicule, et dans lequel l'appareil de navigation comporte un dispositif de détermination de position, et en ce que le logiciel de navigation est conçu de manière à ce qu'il effectue une détermination de position améliorée à partir des signaux dudit dispositif de détermination de position et des données de fonctionnement et/ou de capteurs dudit au moins un composant de véhicule (25, 26, 27).
